# EUROPEAN PATENT SPECIFICATION

(11) **EP 3 390 270 B1**
(45) Date of publication and mention of the grant of the patent: **12.02.2020**
(21) Application number: 16834205.3
(22) Date of filing: 16.12.2016
(51) Int. Cl.: B67D 7/04, B60S 5/02, B67D 7/06

(54) **PETROL STATION AND METHOD FOR REFUELLING VEHICLES**
TANKSTELLE UND VERFAHREN ZUR BETANKUNG VON FAHRZEUGEN
STATION-SERVICE ET MÉTHODE POUR RAVITAILLER DES VÉHICULES

(30) Priority: 18.12.2015 NL 2015984; 09.06.2016 NL 2016923
(43) Date of publication of application: 24.10.2018
(73) Proprietor: Wasmunt B.V., 1432 ED Aalsmeer (NL)
(72) Inventor: LOOGMAN, Gerardus Johannes, 1432 EG Aalsmeer (NL)
(74) Representative: Hooiveld, Arjen Jan Winfried
(86) International application number: PCT/NL2016/050882
(87) International publication number: WO 2017/105239

(56) References cited:
- DE-A1- 4 120 060
- GB-A- 426 451
- US-A1- 2003 164 200
- US-A1- 2011 067 777

## Description

The present invention relates to a fuel filling station according to claim 1. The present invention further relates to a method for the supply of fuel according to claim 14.

Prior art fuel filling stations comprise one or more underground or aboveground fuel reservoirs, to which a multitude of fuel filling devices, also called fuel dispensers, are connected. Usually, several fuel hoses are connected to these fuel dispensers, via which hoses different fuels from different reservoirs can be transported to fuel tanks of motorised vehicles. In this way a fuel filling station is capable of supplying fuel simultaneously to a large number of vehicles with a large variety of combustion engines.

As a result of the increasing use of motorised vehicles, increasing waiting times constitute an increasingly common problem at current fuel filling stations.

Filling stations with a conveyor are known from US 2011/006777 A1 and DE 41 20 060 A1. A method for supplying fuel to a vehicle under construction while being conveyed is known from US 2003/0164200 A1.

It is an object of the present invention to provide a fuel filling station by which waiting times are drastically reduced.

In order to achieve that object, the invention provides a fuel filling station of the kind described in the introduction, which comprises a vehicle conveyor for moving vehicles in succession to within the operating range while fuel is being supplied to a vehicle that is present within said operating range. As a result, a waiting vehicle to be filled present outside the operating range of the fuel filling device, directly behind a vehicle being supplied with fuel, already comes within the operating range of the fuel filling device while the preceding vehicle is being refuelled. As a result, the waiting vehicle can be serviced directly after the refuelling of the preceding vehicle, without the vehicle having to move independently to the fuel filling device. In this way full use is made of the capacity of the fuel filling device, so that long waiting times are prevented. The invention achieves that vehicles are supplied with fuel in direct succession without interruption and are conveyed from an entrance of the fuel filling station to an exit thereof in a continuous manner.

According to the invention, the fuel filling device is stationary, being configured to supply fuel to a vehicle while the latter is being conveyed. A special advantage of a stationary fuel filling device is that it does not move relative to a fuel reservoir connected thereto. Consequently, no means that allow movement of the fuel filling device relative to said reservoir are needed, so that a mechanically relatively simple connection can be used between the fuel filling device and the reservoir.

In a preferred embodiment, a conveying path of the vehicle conveyor forms an at least substantially closed circuit. A special advantage of a conveying path thus configured is that the fuel filling device will at all times move in the direction of the entrance of the fuel filling station again and that consequently the operating range of the fuel filling device can be kept within bounds.

In another preferred embodiment, a conveying path of the vehicle conveyor forms an at least substantially straight line. A special advantage of a conveying path thus configured is that the entrance side and the exit side of the vehicle conveyor are in line with each other and that consequently the vehicle conveyor can be easily implemented in existing fuel filling stations.

In another preferred embodiment, a conveying speed of the vehicle conveyor can be adjusted in dependence on the amount of fuel to be supplied to the vehicles. A special advantage of this is that the throughput of the fuel filling station can be adapted to the fuel demand of the vehicles present on the vehicle conveyor. The capacity of the fuel filling station will thus be used to the full at all times.

According to the invention, the fuel filling device comprises a slide provided to move along the vehicle conveyor, which slide is configured to accommodate a loop portion of a fuel hose connected to the fuel filling device between the fuel filling device and the inlet orifice, which fuel hose is provided with a connecting element at a free end thereof, which connecting element is to be connected to an inlet orifice of the fuel tank of a vehicle. Said slide guides the fuel hose while fuel is being supplied to a vehicle being conveyed by the vehicle conveyor, such that a length and orientation of an end portion of the fuel hose to be directed toward the inlet orifice will remain substantially constant. In this way it is ensured that the connection to the inlet orifice is maintained at all times.

In a preferred embodiment, the slide is provided near an upper side of a frame disposed beside the vehicle conveyor, such that the slide is at least partly positioned above the vehicle. By providing the slide above the vehicle, an end portion of the fuel hose that is connected to the fuel filling device is oriented upward. The presence of any excess length of said end portion between the fuel filling device and the vehicle is thus prevented, so that the vehicle cannot drive over the fuel hose and space is created for any operating staff that may be present.

In a preferred embodiment, an elongate arm is mounted to the slide for guiding the loop portion near a free end of the arm, wherein the arm is pivotable between a first position, in which the longitudinal axis of the arm is at least substantially parallel to the first axis, and a second position, in which said longitudinal axis is at least substantially perpendicular to the first axis and the vertical axis of the frame, such that in the second position the arm extends to near the side of the vehicle remote from the fuel filling device. A special advantage of this arm is that the end portion of the fuel hose to be directed toward the inlet orifice of the vehicle can be positioned on either side of the vehicle. As a result, vehicles having an inlet orifice on the left-hand side as well as vehicles having an inlet orifice on the right-hand side can be serviced with a fuel filling device disposed on one side of the vehicle conveyor.

In another preferred embodiment, the fuel filling station further comprises a regulator-controlled driving mechanism for driving the slide, such that the slide is movable along the vehicle conveyor at a speed at least substantially the same as the conveying speed of the vehicle conveyor. As a result, the slide will actively move along with a vehicle being conveyed by the vehicle conveyor, and the fuel hose is positioned such while fuel is being supplied to the vehicle that a length and an orientation of an end portion of the fuel hose to be directed toward the inlet orifice will remain substantially constant. In this way an optimum connection to the inlet orifice is ensured that all times. It is noted that the slide is driven electrically, hydraulically, pneumatically and/or similarly by the driving mechanism.

According to the invention, the slide is furthermore provided with a holder for placement of the connecting element therein. A special advantage of such a holder is that it holds and surrounds connecting elements. The connecting elements can therefore be automatically moved to the inlet orifice of a second vehicle, in a direction opposite the direction of movement of the vehicle conveyor, during the transitional period between the end of a refill of a first vehicle and the start of a refill of a second vehicle disposed behind the first vehicle without fuel leaking into the environment. The regulator further ensures that the slide will move along with the vehicle again for supplying the second vehicle with fuel as soon as the connecting element is taken from the holder. The slide is connected to a fuel pump by means of a first hose portion for dispensing fuel. Connected to said first hose portion is a second hose portion, which connects the first hose portion to a connecting element. In a preferred embodiment, the slide comprises a number(for example 2, 3 or 4) of such combinations of wholes portions, each combination of hose portions being intended for a specific type of fuel (for example Euro 95, a petrol type having a higher octane number, and one or two grades of diesel fuel) . It is desirable to use standard fuel pumps in the fuel filling station. Standard fuel pumps are designed to dispense a desired amount (for example 40 litres per minute) through a dispensing hose having an internal diameter of about 18 mm and a length of 4-5 m (is variable).
It will be understood that the first hose portion/second hose portion combination of the fuel filling station according to the invention is considerably longer than the dispensing hose of a conventional fuel filling station. In a preferred embodiment, the length of the first hose portion is about 1.5 m, and the length of the second hose portion is 7 m. After the second hose portion comes a short, curled hose (about 50/60 cm), which is mounted to the steel pivot arm. Said steel pivot arm has a length of about 180 cm. Due to this addition, the total additional length for conveying the fuel is about 11.00 m. Because of this, there is a risk that a standard fuel pump will not have the capacity to dispense the desired amount, for example 40 l/minute. In a preferred embodiment, the first hose portion has a larger internal diameter, for example 32 mm. The second hose portion preferably has the standard 32 mm internal diameter, so that this portion is sufficiently flexible and standard connecting elements can be connected thereto without special accessories being required.
To prevent accumulation of fuel vapours, a fuel filling station is provided with an exhaust mechanism. As a rule, the maximum pump delivery for petrol is determined by the capacity of the exhaust mechanism. The maximum allowable delivery varies with each country; in the Netherlands it is set at 40 litres per minute, for example. This limitation does not apply to diesel fuel, because diesel fuel is much less volatile. A delivery of 80 litres per minute, using a standard fuel pump, can be realised with the installation described herein.

In another preferred embodiment, the slide is further provided with a monitor that is visible to an occupant of the vehicle, which monitor serves to provide the occupant with information. On such a monitor, information such as the supplied amount of fuel, the fuel price, the amount to be paid, the product name and/or other information that is relevant to the customer can be displayed.

In another preferred embodiment, an energy chain is provided between the fuel filling device and the slide for guiding connections between the fuel filling device and the slide. The connections to be guided by the energy chain typically comprise dispensing hoses, universal joints, electric cables and/or data cables. A special advantage of such an energy chain is that connections are guided in a controlled manner, in particular without kinks or torsion, upon movement of the slide toward and away from the fuel filling device.
In a preferred embodiment, the slide is provided with a pivot arm, to which the downstream portion of the dispensing hose is attached. Said pivot arm makes it possible to reach the inlet orifice of the fuel tank of a vehicle when said inlet orifice is located on the remote side of the vehicle, viewed from the slide.
In another preferred embodiment, the slide is provided with a mechanism, for example a reel, which winds the loop portion of the hose off and up again, depending on the distance from the slide to the fuel pump.

In another preferred embodiment, the fuel filling station further comprises a cashpoint system for payment of the fuel supplied to the fuel tank while fuel is being supplied to the vehicle. The advantage of such a cashpoint system, via which payment of the purchased fuel can be effected while fuel is being supplied to the vehicle, is that the vehicle can drive off immediately after being refuelled. As a result, any build-up of vehicles after refilling is prevented, which further prevents long waiting times at the fuel filling station. In a preferred embodiment, the cashpoint system can be accessed via a control panel that can be operated from the vehicle, in particular from the driver's seat of the vehicle. Because vehicles can vary in height, it is desirable that the control panel be adjustable for height.
Furthermore it is desirable that the position of the control panel be adjustable also in the longitudinal direction of the vehicle. In a particularly desirable preferred embodiment, the control panel is adjustable both in the vertical direction and in the longitudinal direction of the vehicle. This can be realised in a manner that is known to the skilled person, for example by attaching the control panel to an arm provided with two pivot points or with a ball joint.
In another preferred embodiment, the vehicle conveyor comprises a belt conveyor or a chain conveyor provided with a pusher element to be placed behind a wheel of the vehicle, which is configured to receive vehicles driven onto the conveyor at the entrance and deliver said vehicles at the exit. A chain conveyor is preferably provided with wheel guiding means which ensure the lateral position of the vehicle relative to the pusher element and to the fuel filling device.
In a preferred embodiment, part of the vehicle conveyor is installed underground, for example in a liquid-tight basin. The liquid-tight basin may be made of concrete or steel, for example, and be lined with a plastic that is capable of withstanding contact with the fuels being handled. Any fuel that is spilled during refuelling is collected in the liquid-tight basin. Vapours are exhausted from the liquid-tight basin in order to prevent the risk of explosion.

In a special preferred embodiment, the vehicle conveyor is provided with a spraying installation, which sprays water onto the vehicle conveyor. The water drains into the liquid-tight basin through openings in the vehicle conveyor. The water serves to discharge the word, mud, sand and possibly salt from the vehicles, carrying along any fuel that has been spilled. In addition, the water provides a certain lubrication of the vehicle conveyor. The water is pumped from the liquid-tight basin from time to time for purification in a facility designed for that purpose.

The fuel filling station according to the invention is preferably provided with one or more of the following safety features.
a. An emergency stop device, which stops at least a number of the components, for example the vehicle conveyor, the slide, the fuel pump, and the like in one operation. The emergency stop device can have any form that is known to the skilled person, for example a court that extends along the length of the vehicle conveyor, a number of emergency switches arranged at strategic locations along the installation, and the like.
b. A device that turns off the slide drive when the slide or a component connected thereto (for example a hose, a cable or a control panel) hits an obstacle. If the slide is driven by an electric motor, for example, and the regulator moves the slide at a speed that is adapted to the speed of the vehicle conveyor, the power consumption of the electric motor will increase when the slide encounters resistance. The device may consist of a current limiter that turns off the motor when a limiting value is exceeded.
c. A device that prevents the slide from returning to the starting point until the pivot arm has returned to its position of rest. This can be realised by means of a sensor which confirms the position of rest of the pivot arm, or by means of an electromagnet, or by means of a combination of the two.
d. A device that stops the vehicle conveyor when the vehicle nears the end of the installation and the connecting element has not been placed back in the designated holder yet.
e. A device that stops the vehicle conveyor when the vehicle nears the end of the installation and an obstacle (for example another vehicle) is present in the space directly in the path of the exiting vehicle.
f. A device that stops the movement of the slide when the holder of the connecting elements (which moves along with the slide) hits an obstacle. This device may consist of a rubber switching strip (of the type that is also used in automatic garage doors) that is provided on both sides of the holder.

In a preferred embodiment, the fuel pump control and the vehicle conveyor control are completely separate from each other. The connecting element is for example provided with a sensor that indicates when the vehicle tank is full. This sensor can be connected both to the fuel pump and to the controller of the vehicle conveyor.

In a preferred embodiment, the connecting element is provided with a clamp that keeps the valve of the connecting element open. The clamp is provided with a mechanism that releases the clamp (and thus closes the fuel valve) when the fuel tank of the vehicle is full. This enables the operator of the fuel filling station to carry out other operations in the meantime, for example washing the vehicle's windscreen, or welcoming the driver of the next vehicle.

The present invention further provides a method of the kind described in the introduction, which is characterised in that vehicles are moved in succession into an operating range of a fuel filling device while fuel is being supplied to a vehicle present within the operating range. As a result, a waiting vehicle to be refuelled present outside the operating range of the fuel filling device, directly behind a vehicle being supplied with fuel, will already come within the operating range of the fuel filling device while the latter vehicle is being refuelled. The waiting vehicle can thus be serviced directly after the preceding vehicle has been refuelled, without having to move independently to the fuel filling device. The capacity of the fuel filling device is thus used to the full, so that long waiting times are prevented. The invention achieves that vehicle are supplied with fuel immediately after each other without interruption and are conveyed from an entrance of the fuel filling station to an exit of the fuel filling station in a continuous manner.

More in particular, the method comprises the following steps:
1. A vehicle with a customer present therein stops just before the vehicle conveyor.
2. An assistant greets the customer, asks the customer which fuel and how much of it he or she wants and performs an action with the cashpoint system, so that payment of the fuel can take place after the refill and payment is at the same time ensured.
3. The assistant guides the vehicle onto the vehicle conveyor.
4. Once the vehicle has reached the correct position, the assistant makes a stop sign and asks the client to turn off the ignition; refuelling can now start.
5. The assistant takes the connecting element, also called dispensing nozzle, from the holder for the connecting element, also called the nozzle box, removes the filler cap from the inlet orifice of the vehicle, moves the dispensing nozzle to the inlet orifice, possibly by pivoting the pivot arm, and starts refuelling.
6. While refuelling takes place, the slide actively or passively moves along with the vehicle from the moment the dispensing nozzle is removed from the nozzle box. This takes place at the same speed as the speed of the vehicle conveyor.
7. As soon as space is available on the vehicle conveyor again, a next vehicle can be moved onto the vehicle conveyor and the above-described process is repeated with a second vehicle on the vehicle conveyor.
8. Once refuelling is complete, the assistant removes the dispensing nozzle from the inlet orifice of the vehicle and pivots the pivot arm back to the starting position beside the vehicle conveyor.
9. Once the pivot arm is in the starting position again, the regulator causes the driving mechanism to return the entire slide to the starting point of the vehicle conveyor.
10. After the pivot arm has been returned to its starting position, the customer can be informed that refuelling is complete and that he or she can start the vehicle and leave the vehicle conveyor.

In a preferred embodiment, a vehicle is conveyed past a stationary fuel filling device, and fuel is supplied to the vehicle while the vehicle is being conveyed. A special advantage of the stationary fuel filling device is that it does not move relative to a fuel reservoir connected thereto. Consequently, means that allow movement of the fuel filling device relative to said reservoir are not needed, so that a mechanically relatively simple connection can be used between the fuel filling device and the reservoir.

In a preferred embodiment, the vehicle is conveyed along a conveying path that forms an at least substantially closed circuit. A special advantage of a conveying path thus configured is that the fuel filling device will at all times move in the direction of the entrance of the fuel filling station again and that consequently the operating range of the fuel filling device can be kept within bounds.

A vehicle is conveyed along a conveying path that forms an at least substantially straight line. A special advantage of a conveying path thus configured is that the entrance and exit side of the vehicle conveyor are in line with each other and that consequently the vehicle conveyor can be easily implemented in existing fuel filling stations.

In a preferred embodiment, the occupants of the vehicle are offered an opportunity to purchase articles such as, for example, drinks, snacks, tobacco products, lunch products and the like while refuelling takes place and/or immediately subsequent thereto. In one embodiment, the articles are displayed in the immediate vicinity of the fuel filling device. In an alternative embodiment, the articles are displayed on a screen. The screen is preferably an interactive screen, so that an occupant of the vehicle can use this screen for placing orders, for example by touching the screen.

In an alternative embodiment, the articles are shown on the screen of a mobile telephone of an occupant of the vehicle, which mobile telephone is used for selecting and ordering one or more articles. Articles that have been ordered can be brought to the vehicle by an operator, for example, or be collected at a drive-through counter by the driver of the vehicle upon driving off. The articles that have been purchased can be paid for either separately or together with the fuel. The supply of fuel can be combined with other operations regarding the vehicle, for example washing the windows, in particular the windscreen; replenishing the windscreen washer fluid; checking and adjusting the tyre pressure, if necessary; checking and adjusting the oil level, if necessary; checking and adjusting the brake fluid level, if necessary; checking and adjusting the coolant level, if necessary; checking the battery status; and the like.

In order to have these operations take place in efficient manner, the vehicle may be provided with one or more sensors that can be read remotely. The tyres, for example, may be provided with sensors that transmit tyre pressure data, for example using a Bluetooth protocol or the like. The fuel filling device may comprise a receiver which is capable of receiving and displaying a signal, for example on a screen. Similar sensors can indicate the tyre pressure and also indicate whether the value obtained is correct or needs adjusting. Such sensors are available from Salutica Allied Solutions, Perak, Malaysia, under the name of Fobo Tire.

In a similar manner, other important vehicle data, such as the oil level, the brake fluid level, the coolant level, the battery voltage and the like can be presented for remote reading, which significantly speeds up the associated service.

Because the above-mentioned additional operations may take more time than the refill, it may be desirable to provide a parking space for the vehicle where these operations can be performed or completed after the supply of fuel has been terminated, without the throughput of vehicles in the fuel filling station being retarded or impeded. According to another possibility, a second conveyor belt may be provided where these operations are performed and/or where the vehicle is washed and/or the interior of the vehicle is cleaned. In one embodiment, the fuel filling device comprises means for recognising a vehicle. Example of such means include a scanner for scanning a license plate of the vehicle; a reader for reading an RFID chip present in or on the vehicle, and the like. The vehicle data can be linked to a current account, so that payment for the supplied fuel and possibly other articles and services that have been supplied can take place automatically.

In an alternative embodiment, the driver of the vehicle is automatically recognised, for example via the driver's mobile telephone. Payment can in that case take place via a current account that is linked to the person of the driver, or via a payment app in the driver's mobile telephone.

The service to the driver of the vehicle can be further extended, for example by providing the fuel filling device with an ATM that can dispense cash to the driver, if desired.

The invention will now be explained in more detail with reference to figures illustrated in a drawing, in which
- Figure 1 is a perspective view of a fuel filling station in a preferred embodiment of the invention, viewed in a direction substantially opposite the direction of conveyance of the vehicles;
- Figure 2 is a perspective view of a fuel filling station in a preferred embodiment of the invention, viewed in the direction of conveyance of the vehicles;
- Figure 3 is a top view of a fuel filling station in a preferred embodiment of the invention;
- Figure 4 is a side view of a fuel filling station in a preferred embodiment of the invention;
- Figure 5 is a rear view of a fuel filling station in a preferred embodiment of the invention;
- Figure 6 is a larger-scale view of a part of the fuel filling station that is shown in rear view in figure 5;
- Figure 7 shows part of the fuel filling station that is shown in side view in figure 4;
- Figure 8 is a rear view of the part shown in figure 7.

The figures show various views of preferred embodiments of a fuel filling station according to the invention, which is made up of various parts.

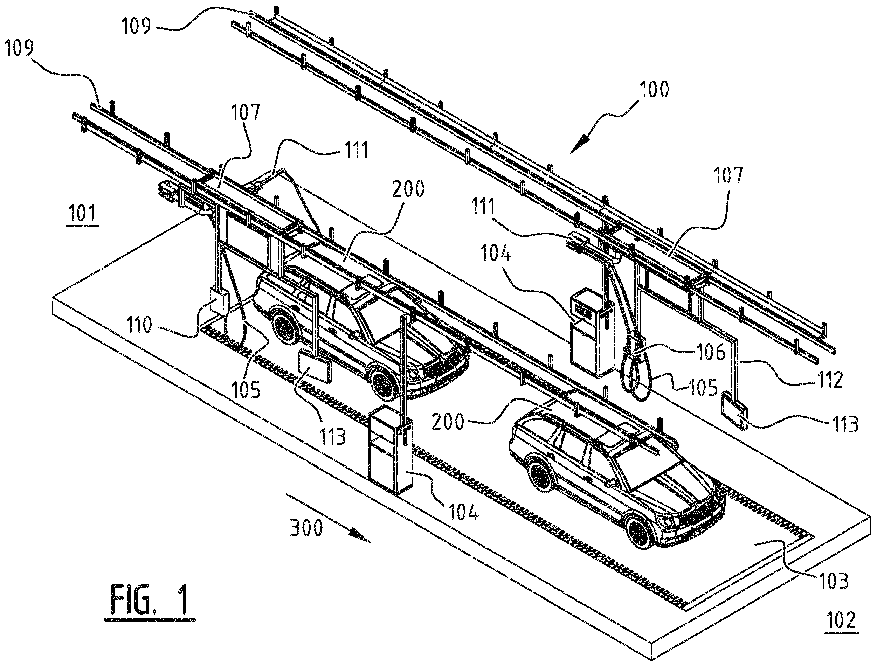

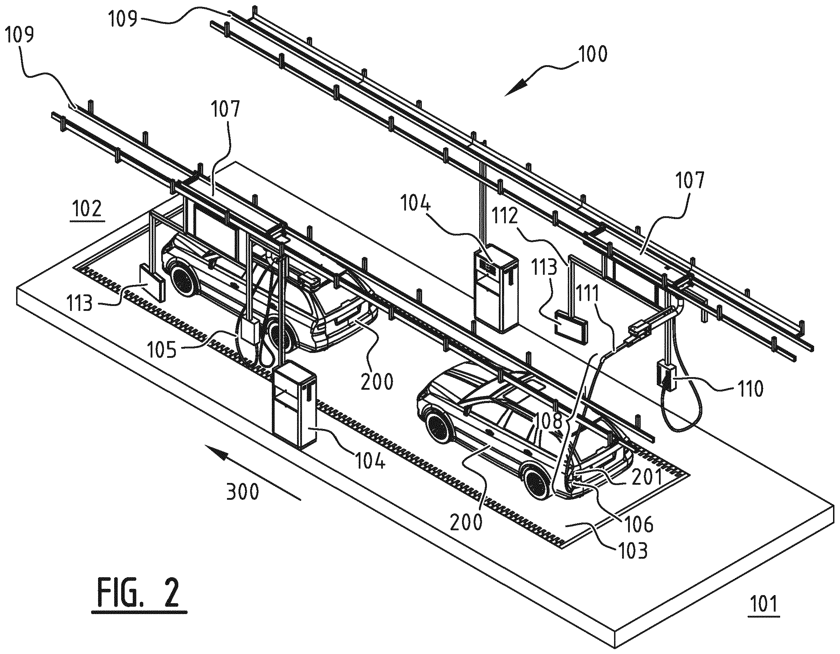

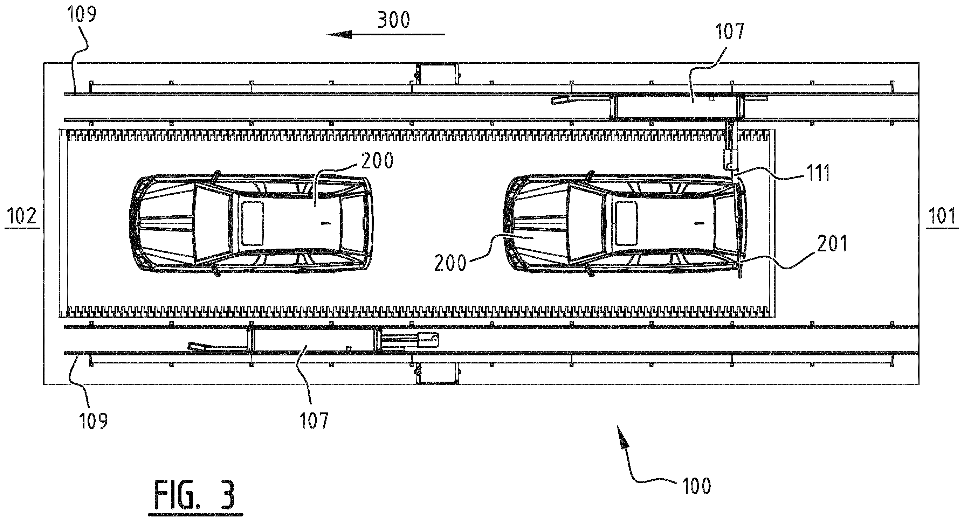

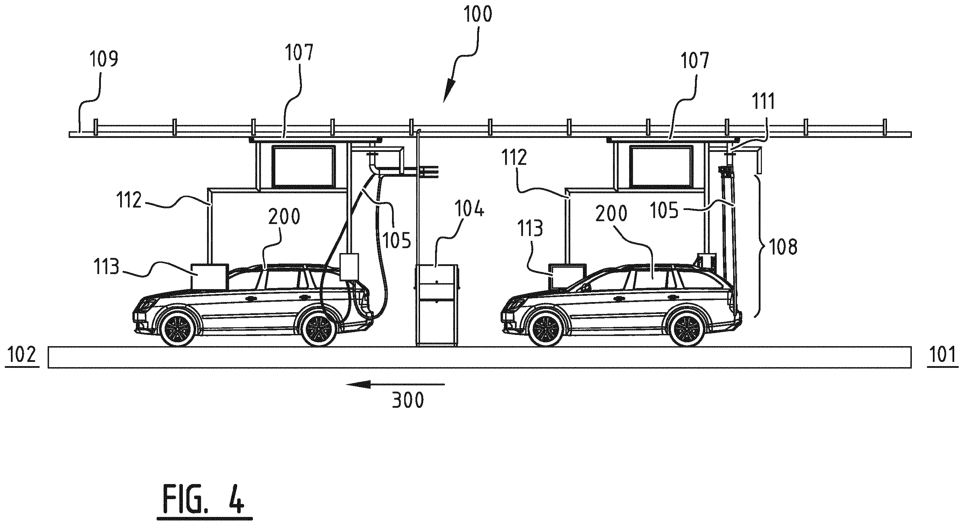

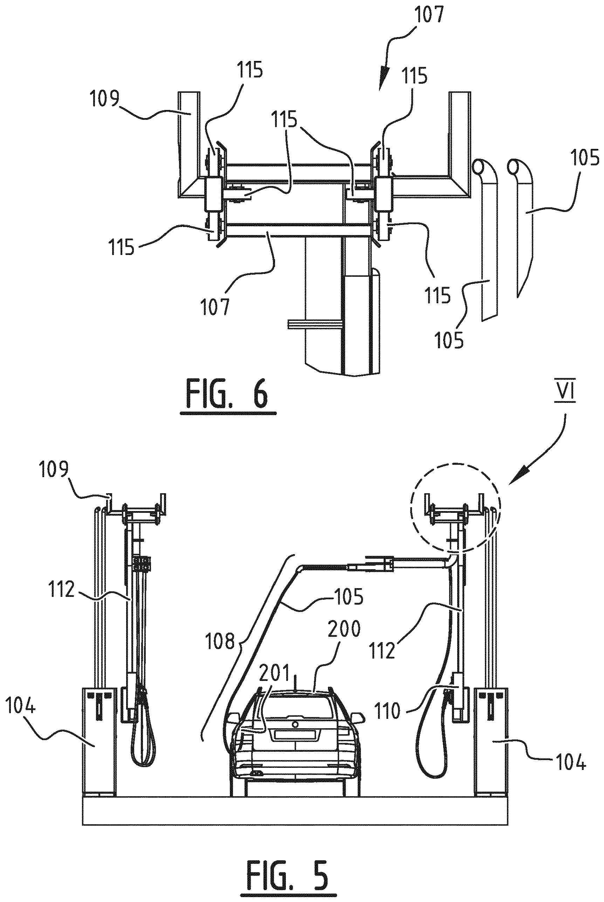

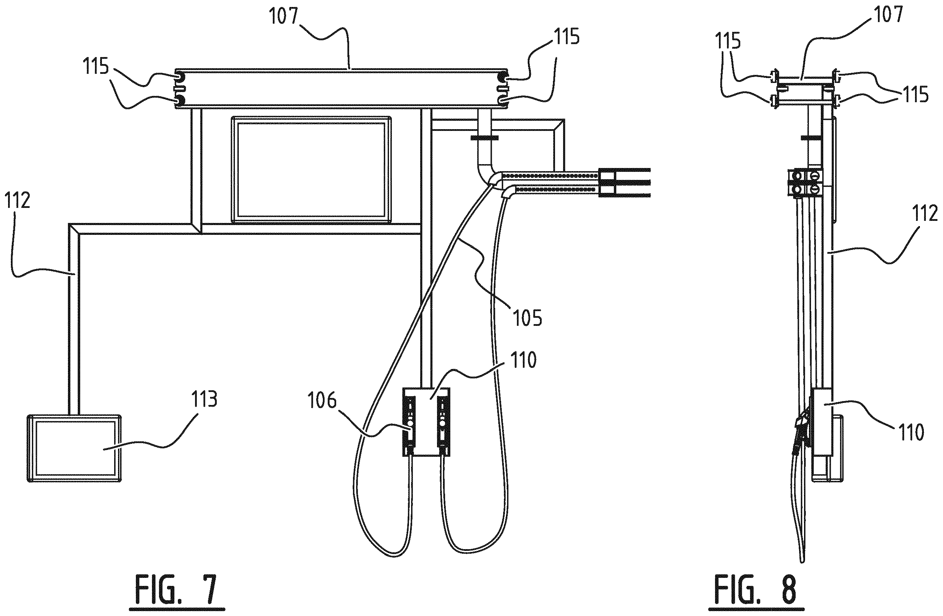

The fuel filling station 100 comprises a vehicle conveyor 103, which is configured to receive vehicles 200 driven onto the conveyor at an entrance 101, convey the vehicles along a conveying path 300 toward an exit 102 and subsequently deliver the vehicles at the exit 102. Said conveying path 300 extends along a substantially straight line in figures 1 - 8. The vehicle conveyor 103 typically has a length of about 10 to 30 m, preferably 10 to 15 m. The conveyor could be a chain conveyor, for example, disposed under the left-hand or right-hand part of the vehicle, as is used in a carwash. It would also be possible to use a different technique for moving the vehicle forward.

The fuel filling station 100 further comprises a fuel filling device 104, also called fuel dispenser, for supplying fuel from a fuel reservoir to a fuel tank of the vehicle 200 via a fuel pump. The fuel filling device 104 is furthermore provided with a fuel hose 105 that is fixedly connected thereto, which fuel hose is provided at a free end thereof with a connecting element 106 to be connected to an inlet orifice 201 of the vehicle 200 for supplying fuel from the fuel filling device 104 to the fuel tank of the vehicle 200. As a rule, the fuel filling device 104 is a standard fuel dispenser for motor fuel, which comprises several fuel hoses 105 for supplying various fuels to vehicles 200. These include fuels such as petrol of different octane numbers, diesel fuel, biodiesel fuel, bio-ethanol, LNG, natural gas, CNG, biogas, HCNG, hydrogen gas, kerosene. This makes the fuel filling station 100 suitable for a large variety of vehicles.

The fuel filling device 104 of the fuel filling station 100 further comprises a slide 107 provided to move along the vehicle conveyor 103, which slide is configured for accommodating a loop portion of a fuel hose 105 connected to the fuel filling device 104 between the fuel filling device 104 and the inlet orifice 201. Said slide 107 guides the fuel hose 105 while fuel is being supplied to a vehicle 200 being conveyed by the vehicle conveyor 103, such that a length and orientation of an end portion 108 of the fuel hose to be directed toward the inlet orifice 201 will remain substantially constant. In this way it is ensured that the connection to the inlet orifice 201 will be maintained at all times. The slide 107 can move passively or actively along an upper side of a frame 109. The slide 107 can therefore guide the fuel hose 105 along the frame 109 while the vehicle 200 is being conveyed, so that the end portion 108 will move along with the vehicle. Connected to the slide 107 are one or more fuel hoses 105, depending on the number of different types of fuel products to be dispensed. When no refuelling is taking place, the fuel hoses 105 are held in a holder 110, also called nozzle box, via a connecting element 106, also called dispensing nozzle. The fuel hoses 105 are each connected to a pivot arm 111 that is attached to the slide 107. The pivot arm 111 can pivot toward the vehicle 200 for bridging the distance to the inlet orifice 201 of the vehicle 200. The slide 107 with the pivot arm 111 is configured so that the left-hand side as well and the right-hand side of the vehicle 200 can be reached with the connecting element 106. The slide 107 may be disposed either to the left of the right with respect to the vehicle 200 present on the vehicle conveyor 103. In the illustrated preferred embodiment, a slide 107 is provided on either side of the vehicle conveyor 103. These two slides 107 suffice in combination with a vehicle conveyor 103 having a length of about 12 to 15 m. The invention is not limited to this embodiment, however, but it also relates to embodiments having a longer vehicle conveyor 103 and possibly three or four vehicle conveyors beside or above the vehicle conveyor 103 as shown. Also mounted to the slide 107 is a frame 112 with a monitor 113 connected thereto, on which information for the customer is displayed. This information may for example consist of the amount of fuel supplied, the fuel price, the amount to be settled, the name of the product and/or other information relevant to the customer. This embodiment can also function without the monitor 113, however.

An energy chain is furthermore provided between the fuel filling device 104 and the slide 107 for guiding connections between the fuel filling device 104 and the slide 107. The connections to be guided by the energy chain typically comprise dispensing hoses, universal joints, electric cables and/or data cables. A special advantage of such an energy chain is that connections are guided in a controlled manner, in particular without kinks or torsion, during movement of the slide 107 toward and away from the fuel filling device 104.

The slide 107 can furthermore be driven by means of a regulator-controlled driving mechanism, which ensures that the slide 107 will move in a controlled and automated or non-automated manner along the frame 109, so that the slide can move along with the vehicle 200 at the speed of movement of the vehicle conveyor 103 while fuel is being supplied to the vehicle 200. The slide 107 may furthermore be provided with running wheels 115, on which the slide 107 runs along the frame 109. The running wheels 115 are preferably provided in such a manner that the slide 107 engages the frame 109 via the running wheels 115 and that both lateral movement and up and down movement of the slide 107 is minimised.

In one embodiment, the length of the vehicle conveyor suffices for accommodating two successive passenger vehicles, for example about 15 m. The speed of movement is about 5 m/s, for example 4.8 m/min. If the fuel being dispensed is petrol, the dispensing speed is preferably 40 litres per minute. When the connecting element is removed from the holder, the regulator will start the movement of the slide 107, possibly after a preset delay, if desired. The delay is adapted to the time the operator needs to open the inlet orifice of the vehicle and place a connecting element in the inlet orifice. The dimensioning of the vehicle conveyor and the speed of movement thereof are selected so that an average refill (about 45 litres) will be complete well before the vehicle reaches the end of the installation. In case refuelling should take longer than usual, the previously described safety system ensures that this cannot cause problems or dangerous situations. Once refuelling is complete, the slide will return to the starting point. This can take place at a higher speed, for example 1m/s (60 m/min). The invention is not limited to the embodiments as shown herein, but it also extends to other preferred variants that fall within the scope of the appended claims.

## Claims

1. A fuel filling station (100) for the supply of fuel to vehicles, comprising a fuel filling device (104) for supplying fuel to a vehicle (200) within an operating range thereof, wherein the fuel filling station (100) comprises a vehicle conveyor (103) for moving vehicles in succession to within said operating range while fuel is being supplied to a vehicle (200) that is present within said operating range, wherein the fuel filling device is stationary and is configured to supply fuel to a vehicle while the latter is being conveyed, wherein the fuel filling station comprises a fuel hose (105) and a slide (107) provided to move along the vehicle conveyor, which slide is configured to accommodate a loop portion of the fuel hose (105) connected to the fuel filling device between the fuel filling device and an inlet orifice (201) of a fuel tank of a vehicle, which fuel hose is provided with a connecting element (106) at a free end thereof, which connecting element is configured to be connected to the inlet orifice, wherein the slide is furthermore provided with a holder (110) configured for placement of the connecting element therein.

2. A fuel filling station according to claim 1, wherein a conveying path (300) of the vehicle conveyor forms an at least substantially closed circuit.

3. A fuel filling station according to claim 1, wherein a conveying path (300) of the vehicle conveyor forms an at least substantially straight line.

4. A fuel filling station according to any one of claims 1-3, wherein a conveying speed of the vehicle conveyor can be adjusted in dependence on the amount of fuel to be supplied to the vehicles.

5. A fuel filling station according to any one of claims 1-4, wherein the slide is provided near an upper side of a frame (109) disposed beside the vehicle conveyor, such that the slide is at least partly positioned above the vehicle.

6. A fuel filling station according to any one of claims 1-5, wherein an elongate arm (111) is mounted to the slide for guiding the loop portion near a free end of the arm.

7. A fuel filling station according to any one of claims 1-6, wherein the arm is pivotable between a first position, in which the longitudinal axis of the arm is at least substantially parallel to the first axis, and a second position, in which said longitudinal axis is at least substantially perpendicular to the first axis and the vertical axis of the frame, such that in the second position the arm extends to near the side of the vehicle remote from the fuel filling device.

8. A fuel filling station according to any one of claims 1-7, further comprising a regulator-controlled driving mechanism for driving the slide, such that the slide is movable along the vehicle conveyor at a speed at least substantially the same as the conveying speed of the vehicle conveyor.

9. A fuel filling station according to any one of claims 1-8, wherein the slide is further provided with a monitor (113) that is visible to an occupant of the vehicle, which monitor serves to provide the occupant with information.

10. A fuel filling station according to any one of claims 1-9, wherein an energy chain is provided between the fuel filling device and the slide for guiding connections between the fuel filling device and the slide.

11. A fuel filling station according to claim 10, wherein the connections to be guided by the energy chain comprise dispensing hoses, universal joints, electric cables and/or data cables.

12. A fuel filling station according to any one of claims 1-11, further comprising a cashpoint system for payment of the fuel supplied to the fuel tank while fuel is being supplied to the vehicle.

13. A fuel filling station according to any one of claims 1-12, wherein the vehicle conveyor comprises a belt conveyor or a chain conveyor provided with a pusher element to be placed behind a wheel of the vehicle, which is configured to receive vehicles driven onto the conveyor at the entrance (101) and deliver said vehicles at the exit (102).

14. A method for the supply of fuel to vehicles using a fuel filling station (100) according to any one of claim 1-13, wherein the vehicles (200) are conveyed in succession into an operating range of the stationary fuel filling device (104) while fuel is being supplied to a vehicle (200) present within the operating range while the vehicle (200) is being conveyed past the stationary fuel filling device (104).

15. A method according to claim 14, wherein the vehicle is conveyed along a conveying path (300) that forms an at least substantially closed circuit or an at least substantially straight line.

## Patentansprüche

1. Tankstelle (100) zum Einfüllen von Kraftstoffe für Fahrzeuge, die eine Kraftstoffeinfüllvorrichtung (104) aufweist, um Kraftstoff in ein Fahrzeug (200) in einem Betriebsbereich davon einzufüllen, wobei die Tankstelle (100) ein Fahrzeugtransportband (103) aufweist, um Fahrzeuge nacheinander in dem Betriebsbereich zu bewegen, während Kraftstoff in ein in dem Betriebsbereich befindliches Fahrzeug (200) eingefüllt wird, wobei die Kraftstoffeinfüllvorrichtung stationär ist und ausgestaltet ist, Kraftstoff in ein Fahrzeug einzufüllen, während das Letztere transportiert wird, wobei die Tankstelle einen Kraftstoffschlauch (105) und eine Schiebeschiene (107) aufweist, die vorgesehen ist, um sich entlang dem Fahrzeugtransportband zu bewegen, wobei die Schiebeschiene ausgestaltet ist, um einen Schlaufenbereich des Kraftstoffschlauches (105) aufzunehmen, der mit der Kraftstoffeinfüllvorrichtung zwischen der Kraftstoffeinfüllvorrichtung und einer Einlassöffnung (201) eines Kraftstofftanks eines Fahrzeugs verbunden ist, wobei der Kraftstoffschlauch mit einem Verbindungselement (106) an einem freien Ende davon vorgesehen ist, wobei das Verbindungselement ausgestaltet ist, um mit der Einlassöffnung verbunden zu werden, wobei die Schiebeschiene weiterhin mit einer Halterung (110) vorgesehen ist, die zur Anordnung des Verbindungselements darin ausgestaltet ist.

2. Tankstelle nach Anspruch 1, wobei ein Transportweg (300) des Fahrzeugtransportbands einen wenigstens im Wesentlichen geschlossenen Kreis bildet.

3. Tankstelle nach Anspruch 1, wobei ein Transportweg (300) des Fahrzeugtransportbands wenigstens eine im Wesentlichen gerade Linie bildet.

4. Tankstelle nach einem der Ansprüche 1 bis 3, wobei eine Transportgeschwindigkeit des Fahrzeugtransportbands abhängig von der Menge des in die Fahrzeuge einzufüllenden Kraftstoffs angepasst werden kann.

5. Tankstelle nach einem der Ansprüche 1 bis 4, wobei die Schiebeschiene nahe einer Oberseite eines Rahmens (109) vorgesehen ist, der neben dem Fahrzeugtransportband angeordnet ist, sodass die Schiebeschiene wenigstens teilweise über dem Fahrzeug angeordnet ist.

6. Tankstelle nach einem der Ansprüche 1 bis 5, wobei ein Längsarm (111) an der Schiebeschiene angebracht ist, um den Schlaufenbereich nahe einem freien Endes des Arms zu führen.

7. Tankstelle nach einem der Ansprüche 1 bis 6, wobei der Arm zwischen einer ersten Position, an der die Längsachse des Arms wenigstens teilweise parallel zur ersten Achse ist, und einer zweiten Position schwenkbar ist, bei der die Längsachse wenigstens im Wesentlichen senkrecht zur ersten Achse und der vertikalen Achse des Rahmens ist, sodass in der zweiten Position der Arm nahe der Seite des Fahrzeugs entfernt von der Kraftstoffeinfüllvorrichtung verläuft.

8. Tankstelle nach einem der Ansprüche 1 bis 7, die weiterhin einen Regulator-gesteuerten Antriebsmechanismus aufweist, um die Schiebeschiene anzutreiben, sodass die Schiene entlang des Fahrzeugtransportbands in einer Geschwindigkeit bewegbar ist, die wenigstens im Wesentlichen die gleiche ist wie die Transportgeschwindigkeit des Fahrzeugtransportbands.

9. Tankstelle nach einem der Ansprüche 1 bis 8, wobei die Schiebeschiene weiterhin mit einem Monitor (113) vorgesehen ist, der für einen Insassen des Fahrzeugs sichtbar ist, wobei der Monitor dazu dient, dem Insassen Informationen bereitzustellen.

10. Tankstelle nach einem der Ansprüche 1 bis 9, wobei eine Energiekette zwischen der Kraftstoffeinfüllvorrichtung und der Schiebeschiene zum Führen der Verbindungen zwischen der Kraftstoffeinfüllvorrichtung und der Schiebeschiene vorgesehen ist.

11. Tankstelle nach Anspruch 10, wobei die von der Energiekette zu führenden Verbindungen Ausgabeschläuche, Gelenkkupplungen, Elektrokabel und/oder Datenkabel aufweisen.

12. Tankstelle nach einem der Ansprüche 1 bis 11, die weiterhin ein Kassenautomatensystem zum Bezahlen des in den Kraftstofftank eingefüllten Kraftstoffs aufweist, während Kraftstoff in das Fahrzeug eingefüllt wird.

13. Tankstelle nach einem der Ansprüche 1 bis 12, wobei das Fahrzeugtransportband einen Bandförderer oder einen Kettenförderer aufweist, der mit einem Schieberelement vorgesehen ist, das hinter einem Rad des Fahrzeugs anzuordnen ist, der ausgestaltet ist, Fahrzeuge aufzunehmen, die am Eingang (101) auf das Förderband gefahren werden und die Fahrzeuge am Ausgang (102) auszugeben.

14. Verfahren zum Einfüllen von Kraftstoff in Fahrzeuge mittels einer Tankstelle (100) nach einem der Ansprüche 1 bis 13,
wobei die Fahrzeuge (200) nacheinander in einen Betriebsbereich der stationären Kraftstoffeinfüllvorrichtung (104) transportiert werden, während Kraftstoff in ein im Betriebsbereich vorhandenes Fahrzeug (200) eingefüllt wird, während das Fahrzeug (200) durch die stationäre Kraftstoffeinfüllvorrichtung (104) transportiert wird.

15. Verfahren nach Anspruch 14, wobei das Fahrzeug entlang einem Transportweg (300) transportiert wird, der einen im Wesentlichen geschlossenen Kreis oder eine im Wesentlichen gerade Linie bildet.

## Revendications

1. Station-service (100) pour la fourniture de carburant à des véhicules, comprenant un dispositif de ravitaillement en carburant (104) permettant de fournir du carburant à un véhicule (200) dans une plage de fonctionnement de celui-ci, dans laquelle la station-service (100) comprend un transporteur de véhicules (103) permettant de déplacer des véhicules les uns après les autres jusqu'à l'intérieur de ladite plage de fonctionnement tandis que du carburant est en train d'être fourni à un véhicule (200) qui est présent dans ladite plage de fonctionnement, dans laquelle le dispositif de ravitaillement en carburant est fixe et est configuré pour fournir du carburant à un véhicule tandis que ce dernier est en train d'être transporté,
dans laquelle la station-service comprend un tuyau de carburant (105) et un glisseur (107) prévus pour se déplacer le long du transporteur de véhicules, lequel glisseur est configuré pour recevoir une partie boucle du tuyau de carburant (105) raccordé au dispositif de ravitaillement en carburant entre le dispositif de ravitaillement en carburant et un orifice d'admission (201) d'un réservoir de carburant d'un véhicule, lequel tuyau de carburant est doté d'un élément de raccordement (106) à une extrémité libre de celui-ci, lequel élément de raccordement est configuré pour être raccordé à l'orifice d'admission, dans laquelle le glisseur est de plus doté d'un support (110) configuré pour un placement de l'élément de raccordement dans celui-ci.

2. Station-service selon la revendication 1, dans laquelle un chemin de transport (300) du transporteur de véhicules forme un circuit au moins sensiblement fermé.

3. Station-service selon la revendication 1, dans laquelle un chemin de transport (300) du transporteur de véhicules forme une ligne au moins sensiblement droite.

4. Station-service selon l'une quelconque des revendications 1 à 3, dans laquelle une vitesse de transport du transporteur de véhicules peut être ajustée en fonction de la quantité de carburant devant être fournie aux véhicules.

5. Station-service selon l'une quelconque des revendications 1 à 4, dans laquelle le glisseur est prévu près d'un côté supérieur d'une armature (109) disposée à côté du transporteur de véhicules, de sorte que le glisseur soit au moins partiellement positionné au-dessus du véhicule.

6. Station-service selon l'une quelconque des revendications 1 à 5, dans laquelle un bras allongé (111) est monté sur le glisseur pour guider la partie boucle près d'une extrémité libre du bras.

7. Station-service selon l'une quelconque des revendications 1 à 6, dans laquelle le bras peut pivoter entre une première position, dans laquelle l'axe longitudinal du bras est au moins sensiblement parallèle au premier axe, et une seconde position, dans laquelle ledit axe longitudinal est au moins sensiblement perpendiculaire au premier axe et à l'axe vertical de l'armature, de sorte que dans la seconde position le bras s'étende jusqu'à près du côté du véhicule éloigné du dispositif de ravitaillement en carburant.

8. Station-service selon l'une quelconque des revendications 1 à 7, comprenant en outre un mécanisme d'actionnement commandé par régulateur permettant d'actionner le glisseur, de sorte que le glisseur soit mobile le long du transporteur de véhicules à une vitesse au moins sensiblement identique à la vitesse de transport du transporteur de véhicules.

9. Station-service selon l'une quelconque des revendications 1 à 8, dans laquelle le glisseur est en outre doté d'un moniteur (113) qui est visible pour un occupant du véhicule, lequel moniteur sert à fournir à l'occupant des informations.

10. Station-service selon l'une quelconque des revendications 1 à 9, dans laquelle une chaîne énergétique est prévue entre le dispositif de ravitaillement en carburant et le glisseur pour guider des raccords entre le dispositif de ravitaillement en carburant et le glisseur.

11. Station-service selon la revendication 10, dans laquelle les raccords devant être guidés par la chaîne énergétique comprennent des tuyaux de distribution, des joints universels, des câbles électriques et/ou des câbles de données.

12. Station-service selon l'une quelconque des revendications 1 à 11, comprenant en outre un système de guichet automatique pour un paiement du carburant fourni au réservoir de carburant tandis que le carburant est en train d'être fourni au véhicule.

13. Station-service selon l'une quelconque des revendications 1 à 12, dans laquelle le transporteur de véhicules comprend un transporteur à courroie ou un transporteur à chaîne doté d'un élément pousseur devant être placé derrière une roue du véhicule, qui est configuré pour recevoir des véhicules actionnés sur le transporteur à l'entrée (101) et délivrer lesdits véhicules à la sortie (102).

14. Procédé pour la fourniture de carburant à des véhicules en utilisant une station-service (100) selon l'une quelconque des revendications 1 à 13, dans lequel les véhicules (200) sont transportés les uns après les autres dans une plage de fonctionnement du dispositif de ravitaillement en carburant fixe (104) tandis que du carburant est en train d'être fourni à un véhicule (200) présent dans la plage de fonctionnement tandis que le véhicule (200) est en train d'être transporté au-delà du dispositif de ravitaillement en carburant fixe (104).

15. Procédé selon la revendication 14, dans lequel le véhicule est transporté le long d'un chemin de transport (300) qui forme un circuit au moins sensiblement fermé ou une ligne au moins sensiblement droite.
